Europäisches Patentamt

European Patent Office

Office européen des brevets

(11) Veröffentlichungsnummer: **0 225 979**
**A1**

## (12) EUROPÄISCHE PATENTANMELDUNG

(21) Anmeldenummer: 86113769.3

(22) Anmeldetag: 04.10.86

(51) Int. Cl.⁴: **E21B 7/20 , E21B 3/04**

(30) Priorität: 13.12.85 DE 3544086

(43) Veröffentlichungstag der Anmeldung:
24.06.87 Patentblatt 87/26

(84) Benannte Vertragsstaaten:
AT BE CH DE ES FR GB GR IT LI LU NL SE

(71) Anmelder: Ing. Günter Klemm
Spezialunternehmen für Bohrtechnik
Wintersohlerstrasse
D-5962 Drolshagen(DE)

(72) Erfinder: Klemm, Günter, Dr.
Sebastiansweg 12
D-5960 Olpe(DE)

(74) Vertreter: Selting, Günther, Dipl.-Ing. et al
Delchmannhaus am Hauptbahnhof
D-5000 Köln 1(DE)

(54) **Erdbohrgerät.**

(57) Zum Drehen eines Rohres (17), das in das Erdreich eingeführt werden soll, wird ein Drehteller -
(20) an dem Rohr (17) festgeklemmt. Der Drehteller -
(20) ist auf einem Tisch (19) drehbar. Der Tisch (19)
trägt zwei Gruppen von Antriebszylindern (40,41).
Während die erste Gruppe den Arbeitshub ausführt,
um den Drehteller (20) zu drehen, führt die zweite
Gruppe den Rückhub aus, auf diese Weise wird eine
kontinuierliche Drehung des Drehtellers (20) oder
Stillstand in einer Drehrichtung erreicht.

FIG. 2

EP 0 225 979 A1

# Erdbohrgerät

Die Erfindung betrifft ein Erdbohrgerät zum drehenden Vortreiben eines Rohres in das Erdreich, mit einem an dem Rohr über eine Klemmvorrichtung angreifenden Drehteller, der durch mindestens einen hin-und hergehend angetriebenen ersten Antriebszylinder drehbar ist, und mit einem den ersten Antriebszylinder abstützenden und den Drehteller tragenden Tisch, der drehfest abgestützt ist.

Bei Erd-und Gesteinsbohrgeräten wird zum Drehen des Bohrrohres in der Regel ein Hydraulikmotor benutzt, der an einem drehfest an dem Bohrrohr angebrachten Zahnkranz angreift und das Bohrrohr kontinuierlich dreht. Bei größeren Bohrlochdurchmessern, wie sie für Pfahlgründungen benötigt werden, kann das Bohrrohr einen Durchmesser von etwa 2 bis 3 Metern haben. Ein Hydraulikmotor müßte bei derartig großen Rohrdurchmessern eine sehr große Baugröße haben. Ein solcher Hydraulikmotor wäre unwirtschaftlich und viel zu schwergewichtig.

Aus den genannten Gründen verwendet man für Pfahlbohrungen ab etwa 750 mm Bohrlochdurchmesser Drehantriebe, bei denen das Rohr durch einen oder mehrere Antriebszylinder drehend hin-und herbewegt wird, während es zugleich in das Erdreich gedrückt wird. Das Rohr wird also durch Scheuern in das Erdreich vorgetrieben. Am Ende des Rohres befindet sich ein Schneidring. Da solche Schneidringe in der Regel nur in der einen Drehrichtung schneiden und Material aus dem Ringspalt austragen, erfolgt beim Zurückdrehen kein wesentlicher Vortrieb des Bohrrohrs. Durch die hin-und hergehende Drehung erfolgt eine Verfestigung des vor dem Schneidring liegenden Erdreichs, das bestenfalls weggequetscht wird. Erdbohrgeräte mit hin-und hergehendem Drehantrieb des Bohrrohres sind zwar geeignet, hohe Drehmomente aufzubringen, jedoch sind sie hinsichtlich des Bohrvorschubs unbefriedigend.

Der Erfindung liegt die Aufgabe zugrunde, ein Erdbohrgerät der eingangs genannten Art zu - schaffen, das imstande ist, hohe Drehmomente bei kontinuierlicher Drehung zu erzeugen und einen großen Bohrvorschub zu erreichen.

Zur Lösung dieser Aufgabe ist erfindungsgemäß vorgesehen, daß der Drehteller mehrere über seinen Umfang verteilte Eingriffsteile zum Ansetzen des ersten Antriebszylinders aufweist, daß der erste Antriebszylinder bei seinem Arbeitshub gegen jeweils eines der Eingriffsteile drückt und sich bei seinem Rückhub von diesem Eingriffsteil entfernt und daß eine Schwenkvorrichtung vorgesehen ist, die den ersten Antriebszylinder vor Beginn des Arbeitshubes in Richtung auf die Achse des Drehtellers schwenkt und an eines der Eingriffsteile ansetzt.

Bei dem erfindungsgemäßen Erdbohrgerät ist der Drehantrieb nach Art einer Ratsche ausgebildet, deren Drehteller von dem Antriebszylinder abschnittsweise gedreht wird, wobei der Antriebszylinder sich bei jedem Rückhub von dem Drehteller löst, so daß der Drehteller stets nur in einer Richtung gedreht wird. Dies hat den Vorteil, daß das Rohr bei einem Arbeitsgang in derselben Richtung gedreht wird, so daß nicht durch hin-und hergehendes Drehen eine Verfestigung des Bodens eintritt. Außerdem wird unnötiges Mahlen des Schneidringes im Bohrgut vermieden. Gegenüber den mit kontinuierlichem Drehantrieb arbeitenden bekannten Bohrgeräten besteht der Vorteil, daß der Drehantrieb wesentlich kleiner und leichtgewichtiger ausgeführt werden kann.

Das erfindungsgemäße Erdbohrgerät eignet sich insbesondere zur Herstellung von Pfahlbohrungen mit einem Durchmesser ab etwa 750 mm. Der Kern, der im Inneren des Bohrrohres stehenbleibt, kann mit einem Kernbohrwerkzeug oder einer ähnlichen Einrichtung, wie Bohrschnecke, Endlosschnecke, Bohreimer o.dgl., herausgebohrt werden. Der am Ende des Rohres sich befindende Schneidrung kann als einseitig schneidende Ringbohrkrone ausgebildet sein, deren Schneidelemente nur in einer Drehrichtung schneiden. Eine solche Ringbohrkrone hat eine wesentlich höhere Schneidleistung als eine beidseitig schneidende Bohrkrone.

Bei einer bevorzugten Ausführungsform der Erfindung ist vorgesehen, daß an dem Drehteller mindestens ein zweiter Antriebszylinder angreift, der im wesentlichen gegenphasig zu dem ersten Antriebszylinder gesteuert ist, derart, daß der erste und der zweite Antriebszylinder eine kontinuierliche Drehung des Drehtellers bewirken. Während der erste Antriebszylinder den Rückhub ausführt, führt der zweite Antriebszylinder seinen Arbeitshub durch. Auf diese Weise ist sichergestellt, daß jeweils einer der beiden Antriebszylinder, bzw. eine der beiden Gruppen von Antriebszylindern, drehend auf den Drehteller einwirkt, so daß eine kontinuierliche Drehung ohne Stillstand des Drehtellers erreicht wird.

Gemäß einer bevorzugten Ausgestaltung der Erfindung weist die Klemmvorrichtung mehrere um das Rohr herum angeordnete Klemmbacken auf, die von einem an dem Tisch geführten Druckorgan axial gegen eine Schrägfläche des Drehtellers gedrückt werden; ferner sind Spannelemente vorgesehen, die das Druckorgan gegen den Drehteller ziehen. Die Spannelemente greifen an dem drehfesten Drehteller und dem drehfesten Druckorgan an, so daß sie sich bei der Drehung des Rohres nicht mitdrehen. Dies hat den Vorteil, daß hydraulische Spannelemente benutzt werden können, deren Schläuche sich beim Drehen des Rohres nicht aufwickeln. Die Klemmbacken sind zweckmäßigerweise gegenüber dem Druckorgan durch Axiallager abgestützt, so daß eine reibungsarme Drehung der Klemmbacken in bezug auf das nicht-drehende Drucklager möglich ist.

Obwohl bei dem erfindungsgemäßen Erdbohrgerät beim Betrieb stets nur eine Drehung in der einen Drehrichtung erfolgt, kann es zweckmäßig sein, die Drehrichtung wahlweise ändern zu können. Hierzu ist gemäß einer Weiterbildung der Erfindung vorgesehen, daß der Drehteller erste Eingriffsteile zum Angreifen der Antriebszylinder in der einen Drehrichtung durch Druck und zweite Eingriffsteile zum Angreifen der Antriebszylinder in der anderen Drehrichtung durch Zug aufweist. Die beiden Gruppen von Eingriffsteilen sind beispielsweise Ausnehmungen im Drehteller, die sich in unterschiedliche Richtungen öffnen.

Bei einem Drehteller, der nur eine Art von Eingriffsteilen aufweist, kann die Schwenkvorrichtung, die die Enden der Antriebszylinder gegen den Umfang des Drehtellers drückt, aus elastischen Federn bestehen. Die zwischen den Eingriffsteilen befindlichen Umfangsbereiche des Drehtellers wirken dabei als Nockenbahnen, auf denen die Enden derjenigen Antriebszylinder, die nicht ihren Arbeitshub ausführen, gleiten. Wenn jedoch zwei Arten von Eingriffsteilen vorgesehen sind, muß sichergestellt werden, daß die Antriebszylinder nur mit der einen Art von Eingriffsteilen zusammenwirken. Um dies zu erreichen, besteht jede Schwenkvorrichtung aus einem Antrieb, der in Abhängigkeit von der Wegposition des Kolbens des zugehörigen Antriebszylinders gesteuert ist. Dieser Antrieb kann beispielsweise ein Hydraulikzylinder sein. Nur wenn sich der zugehörige Antriebszylinder am Anfang des Arbeitshubes befindet, wird die zugehörige Schwenkvorrichtung aktiviert, damit der Antriebszylinder an dem Drehteller angreift. Beim anschließenden Arbeitshub des Antriebszylinders kann die Schwenkvorrichtung kraftlos gemacht werden, so daß sie den durch den Drehteller hervorgerufenen Schwenkbewegungen des Antriebszylinders kräftefrei folgt.

Im folgenden werden unter Bezugnahme auf die Zeichnungen Ausführungsbeispiele der Erfindung näher erläutert.

Es zeigen:

Fig. 1 eine Seitenansicht des Erdbohrgerätes,

Fig. 2 eine Draufsicht auf den Drehantrieb aus Richtung des Pfeiles II in Fig. 1,

Fig. 3 einen Vertikalschnitt durch den Drehantrieb und

Fig. 4 eine ähnliche Darstellung wie Fig. 2 bei einer anderen Ausführungsform des Drehtellers.

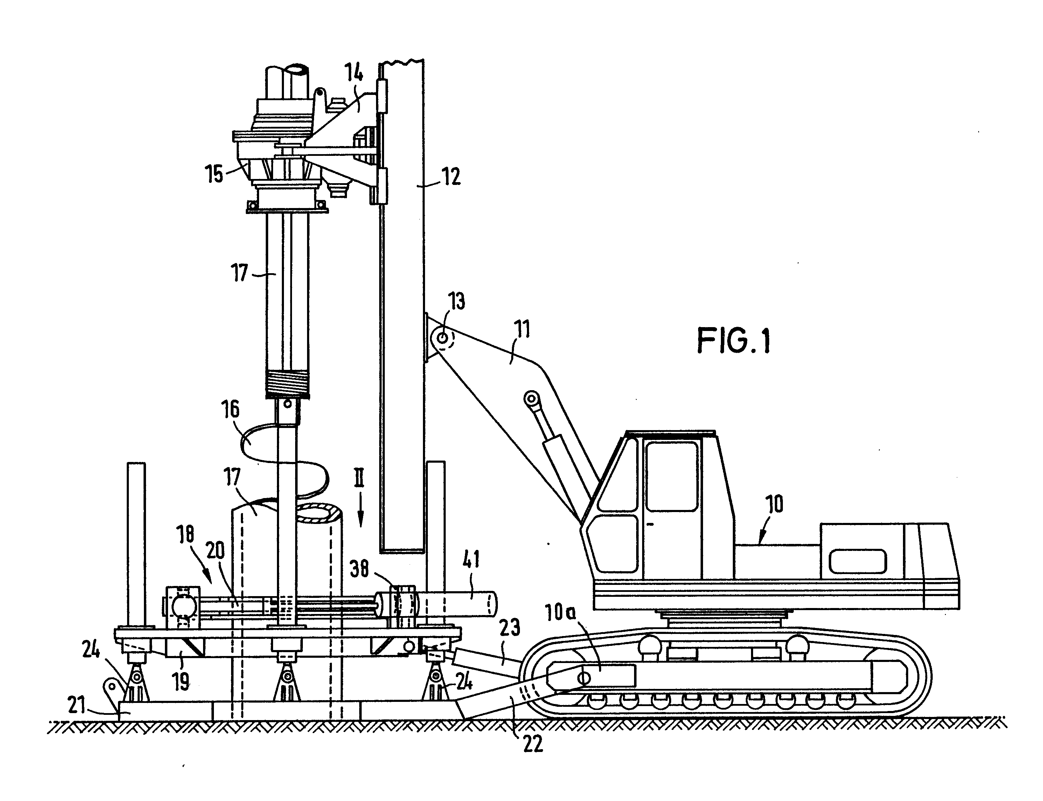

Das in Fig. 1 dargestellte Erdbohrgerät weist ein Raupenfahrzeug 10 auf, das an seinem hydraulisch schwenkbaren Arbeitsarm 11 eine Lafette 12 trägt, welche um eine vertikale Achse 13 herum schwenkbar ist. Längs der Lafette 12 ist ein Schlitten 14 verfahrbar, der einen Kraftdrehkopf 15 für ein Bohrwerkzeug 16 trägt. Der Kraftdrehkopf 15 treibt in bekannter Weise eine Kelly-Stange, die im Kraftdrehkopf längsverschiebbar ist und an deren Ende das Bohrwerkzeug 16 befestigt ist. Dieses Bohrwerkzeug 16 dient zum Ausbohren des Inneren des Rohres 17, das seinerseits in das Erdreich eingedreht wird.

Der Drehantrieb 18 zum Drehen des Rohres 17 weist einen das Rohr ringförmig umgebenden Tisch 19 auf, an welchem der das Rohr 17 ebenfalls ringförmig umgebende Drehteller 20 drehbar gelagert ist.

Die Drehvorrichtung 18 ist an dem ringförmigen Grundgestell 21 befestigt, das gegen die Umgebung des Bohrlochs gelegt wird und durch dessen Mittelöffnung das Rohr 20 hindurchragt. Dieses Grundgestell 21 ist starr, jedoch ggf. verstellbar, mit einem Gegenlager 10a verbunden, das im vorliegenden Fall aus dem Rahmen des Fahrwerks des Raupenfahrzeugs 10 besteht. Zwischen dem Gegenlager 10a und dem Grundgestell 21 erstrecken sich starre Arme 22. Ferner ist das Gegenlager 10a über zwei als Hydraulikzylinder ausgebildete Stützen 23 mit dem Tisch 19 verbunden. Die Stützen 23 greifen an unterschiedlichen Stellen des Umfangs des Tisches 19 an, so daß der Tisch 19 durch Verriegeln der Stützen 23 gegen Drehung gesichert werden kann.

An der Oberseite des Grundgestells 21 befinden sich mindestens zwei umfangsmäßig verteilt angeordnete Lagerböcke 24, von denen jeder einen Stempel 25 trägt. Die Stempel 25 sind als Hydraulikzylinder ausgebildet, deren Zylindergehäuse in dem Tisch 19 um horizontale Achsen - schwenkbar gelagert sind und deren Kolbenstangen an den Gelenken der Lagerböcke 24 angreifen. Durch Betätigen der Hydraulikzylinder kann der Tisch 19 angehoben oder abgesenkt werden. Die Stempel 25 bringen die Vorschubkraft für das Rohr 17 auf und sie können auch dazu benutzt werden, das Rohr aus dem Bohrloch herauszuziehen.

Der Drehteller 20 weist eine Durchgangsöffnung 26 auf, deren Durchmesser größer ist als der Außendurchmesser des Rohres 17, so daß zwischen dem Drehteller 20 und dem Rohr 17 keine direkte Klemmung auftrifft. An die Ausnehmung 26 schließt sich eine als Innenkegel ausgebildete Schrägfläche 27 an, an der Klemmbacken 28 anliegen. Diese Klemmbacken 28 sind durch ineinandergreifende Nuten und Stege unverdrehbar an der Schrägfläche 27 geführt. Ihre Außenfläche ist derjenigen der Schrägfläche 27 angepaßt und ihre Innenfläche liegt vollflächig am Rohr 17 an. Die Klemmbacken 28 bilden Keile, die durch axiale Verschiebung radial an das Rohr 17 angedrückt werden können. An der Unterseite einer jeden Klemmbacke 28 ist ein Axiallager 29 befestigt, das hier aus einer Gleitlagerscheibe besteht.

Ein rohrförmiger Abschnitt 30 des Drehtellers 20 weist einen radial nach außen abstehenden Flansch 31 auf, der in eine entsprechende Ausnehmung des Tisches 19 hineinragt. Diese Ausnehmung ist nach oben hin durch eine an den Tisch 19 angeschraubte Platte 32 bedeckt. Durch den in der Ausnehmung sitzenden Flansch 31 wird der Drehteller 20 gegen axiale Verschiebungen in bezug auf den Tisch 19 gesichert. Damit der Drehteller 20 sich in dem Tisch 19 reibungsarm drehen kann, sind Lager 33 vorgesehen, die eine direkte Reibberührung des Drehtellers 20 mit dem Tisch 19 verhindern.

Unter dem Tisch 19 sind Spannelemente 34 in Form von Hydraulikzylindern angebracht, deren andere Enden an dem ringförmigen Spannelement 35 angreifen. Das Spannelement 35 besteht aus einem Block, der mit seiner Oberseite gegen die Unterseite der Klemmbacken 28 bzw. der Gleitplatten 29 drückt. Wenn die Spannelemente 34 betätigt werden, wird das Druckorgan 35 in Richtung auf den Tisch 19 gezogen, wordurch die Klemmbacken 28 längs der Schrägfläche 27 gleiten und das Rohr 17 an dem Drehtisch 30 verkeilt wird. Um sicherzustellen, daß das Druckorgan 35 sich beim Drehen des Rohres nicht mitdreht, ist dieses Druckorgan mit aufragenden Armen 36 versehen, die zwischen vertikale Führungselemente 37 an der Unterseite des Tisches 19 ragen und das Druckorgan 35 drehfest in bezug auf den Tisch 19 halten.

Auf der Oberseite des Tisches 19 ragen mehrere Schwenklager 38 auf, von denen jedes das Zylindergehäuse eines Antriebszylinders mit horizontaler Achse derart lagert, daß der Antriebszylinder um eine vertikale Achse 39 herum schwenkbar ist. Die Schwenklager 28 der beiden ersten Antriebszylinder 40 sind auf dem Tisch 19 um 180° gegeneinander versetzt und dazwischen befinden sich die Schwenklager 38 der zweiten Antriebszylinder 41. Die Antriebszylinder 40 und 41 sind in Umfangsrichtung abwechselnd und mit gleichen Winkelabständen angeordnet, die im Falle von vier Antriebszylindern jeweils 90° betragen.

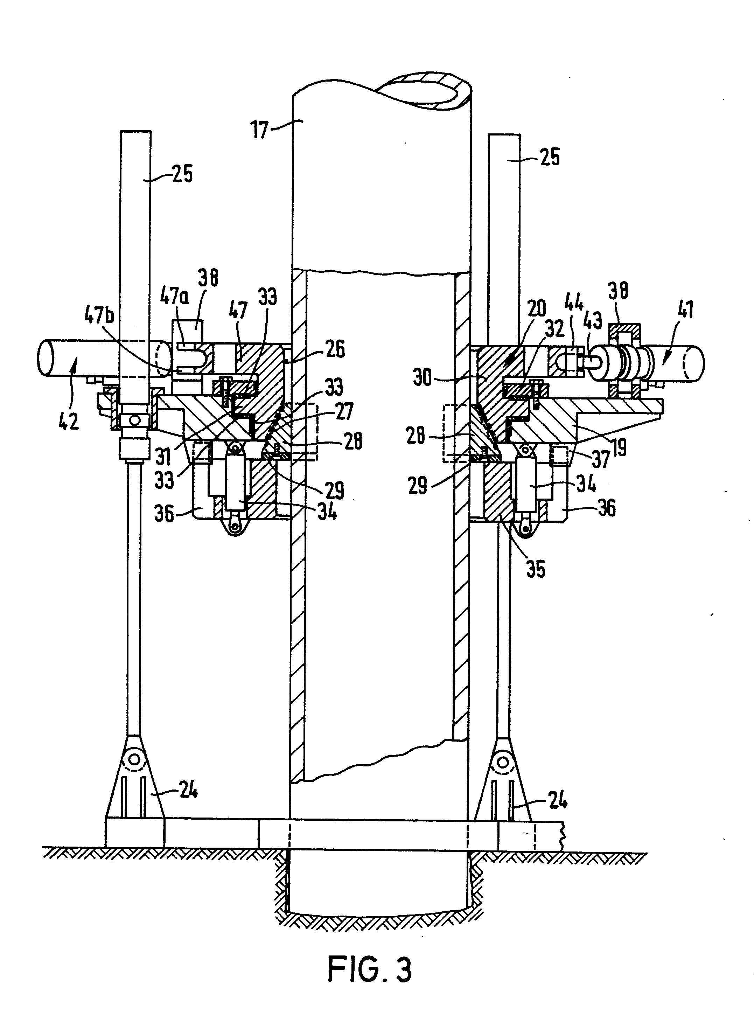

Jeder Antriebszylinder 40, 41 besteht aus einer hydraulischen Kolbenzylindereinheit mit einer aus einem Zylindergehäuse 42 ausfahrbaren Kolbenstange 43. An dem Ende der Kolbenstange 43 ist ein T-förmiger Stößel 44 befestigt, der in Eingriffsteile 45 oder 46 am Umfang des die Oberseite des Tisches 19 axial überragenden Flansches 47 des Drehtellers 20 eingreifen kann. Der Umfang des Flansches 47 besteht aus zwei übereinander angeordneten deckungsgleichen Gabelzinken 47a,47b (Fig. 3), an denen die beiden Arme des T-förmigen Stößels 44 angreifen, während die Kolbenstange 43 zwischen die Gabelzinken 47a,47b ragt.

Jeder Antriebszylinder 40, 42 ist annäherend tangential zu dem Drehteller 20 angeordnet, wobei sämtliche Vortriebskolben mit ihren Kolbenstangen in die gleiche Umfangsrichtung weisen. Die Eingriffsteile 45 und 46 bestehen aus Mulden, die im Umfang des Drehtellers 27 angeordnet sind in die die Stößel 44 eingreifen können, um beim Arbeitshub eines Vortriebskolbens den Drehteller 20 in bezug auf den Tisch 19 zu drehen. Die Eingriffsteile 45 sind so ausgebildet, daß die Stößel 44 beim Ausfahren der Kolbenstange 43 in sie eingedrückt werden, um den Drehteller 20 im Uhrzeigersinn zu drehen. Die zweiten Eingriffsteile 46 sind entgegengesetzt orientiert, so daß die Querbalken der Stößel 44 in sie eindringen können, wenn die Kolbenstangen 43 in das Zylindergehäuse 42 zurückgezogen werden, wodurch der Drehteller 20 im Gegenuhrzeigersinn gedreht wird. Jeweils zwei Eingriffsteile 45 und 46 sind einander dicht benachbart angeordnet und durch einen - schmalen Steg 52 voneinander getrennt. Der Steg 52 bildet gewissermaßen einen Zahn mit zwei hinterschnittenen Flanken, von denen jede geeignet ist, mit einem Stößel 44 zusammenzuwirken.

Die beiden einander gegenüberliegenden ersten Antriebszylinder 40 werden synchron und gleichphasig zueinander betrieben und die hierzu im rechten Winkel angeordneten zweiten Antriebszylinder 41 werden gegenphasig zu den ersten Antriebszylindern 40 betrieben.

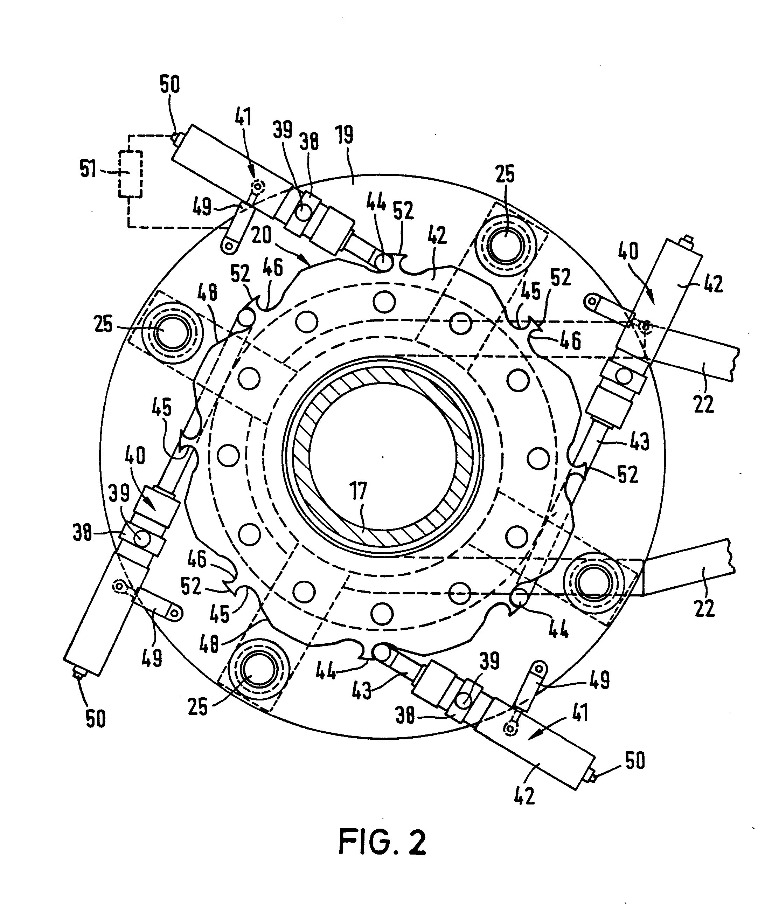

Fig. 2 zeigt den Zustand, indem bei Drehung des Drehtellers 20 im Uhrzeigersinn die ersten Antriebszylinder 40 ihren Arbeitshub gerade beenden, während der Arbeitshub der zweiten Antriebszylinder 41 gerade beginnt. Dies bedeutet, daß die Kolbenstangen 43 der ersten Arbeitszylinder 40 ausgefahren sind, während die Kolbenstangen der zweiten Antriebszylinder 41 noch eingefahren sind. Diese Vorgänge überschneiden sich zeitlich geringfügig, so daß der Drehteller 20 kontinuierlich angetrieben wird. In der Übergangsphase wirken kurzzeitig beide Gruppen von Antriebszylindern antreibend auf den Drehteller 20 ein, so daß dieser nicht zum Stillstand kommt. Anschließend werden die Kolbenstangen 43 der ersten Antriebszylinder 40 eingefahren, wobei die Stößel 44 auf der rückwärtigen Flanke 48, der das Eingriffsteil 45 bildenden Ausnehmung radial nach außen gedrückt werden, so daß sie außer Eingriff mit dem Drehteller gebracht werden. Diese Schwenkbewegung erfolgt jeweils während des Rückhubes des betreffenden Antriebszylinders.

Um den Stößel 44 des Antriebszylinders bei der einen Drehrichtung (im Uhrzeigersinn) an die ersten Eingriffsteile 45 anzusetzen und zu vermeiden, daß diese Stößel mit den zweiten Eingriffsteilen 46, die für die Drehung in Gegenrichtung vorgesehen sind, zusammenwirken, sind die Schwenkvorrichtungen 49 vorgesehen, die jeweils aus einem Hydraulikzylinder bestehen, welcher an dem Tisch 19 abgestützt ist und an dem zugehörigen Antriebszylinder angreift, um diesen um die vertikale Achse 39 herum zu verschwenken. Die Verschwenkung erfolgt in der Weise, daß der Stößel 44 des betreffenden Antriebszylinders 40 bzw. 41 dann an den Umfang des Drehtellers 20 angeschwenkt wird, wenn der Kolben seine Endstellung erreicht hat. Um dies zu erkennen, ist jeder Antriebszylinder mit einem Positionsgeber 50 versehen, der mindestens jede der beiden Endpositionen des Kolbens erkennen kann. Solche Wegsensoren sind bekannt und bedürfen daher keiner detaillierten Erläuterung. Der Wegsensor 50 steuert ein Schaltventil 51 für die Betätigung der zugehörigen Schwenkvorrichtung 49. Wenn der Stößel 44 in Eingriff mit dem Eingriffsteil 45 ist, wird die Schwenkvorrichtung 49 kraftlos geschaltet, so daß der Antriebszylinder sich frei auf die Bewegung der Umfangsfläche des Drehtellers einstellen kann.

Bei dem vorliegenden Ausführungsbeispiel ist die Länge der Kolbenstangen 43 so bemessen, daß bei jedem Arbeitshub eines Vortriebskolbens 40, 41 der Drehteller eine Drehung um 45° ausführt. Daher sind die ersten Eingriffsteile 45 in Winkelabständen von 45° zueinander angeordnet. Auf diese Weise wird bei Drehung im Uhrzeigersinn der Drehteller von den Antriebszylindern vorgestoßen.

Wenn eine Drehung des Drehtellers im Gegenuhrzeigersinn erfolgen soll, werden die Ventile 51 umgeschaltet, wenn die Stößel 44 sich über den zweiten Eingriffsteilen 46 befinden. Die Vortriebskolben nehmen dann den Drehteller jeweils bei ihrer Einzugsbewegung mit, so daß der Drehteller gezogen wird.

Dadurch, daß zwei erste Antriebszylinder 40 und zwei zweite Antriebszylinder 41 jeweils an entgegengesetzten Stellen des Drehtellers angreifen, wird ein auf dem Drehteller 20 einwirkendes Kippmoment vermieden.

Die abwechselnde Betätigung der ersten und der zweiten Antriebszylinder kann zeitabhängig erfolgen, jedoch wird zweckmäßigerweise eine wegabhängige Steuerung durchgeführt, wobei die Signale der Wegsensoren 50 benutzt werden, um die Umschaltung erst dann vorzunehmen, wenn die eine Gruppe von Antriebszylindern ihre Endstellung erreicht hat. Auf diese Weise ist sichergestellt, daß eine kontinuierliche Drehung durchgeführt wird und daß bei jedem Kolbenhub eines Antriebszylinders der betreffende Stößel auch das zugehörige Eingriffsteil findet.

Durch Drehung des Drehtisches 20 auf die beschriebene Weise wird über das Druckorgan 35 und die Klemmbacken 28 das Rohr 17 mitgenommen und ebenfalls gedreht.

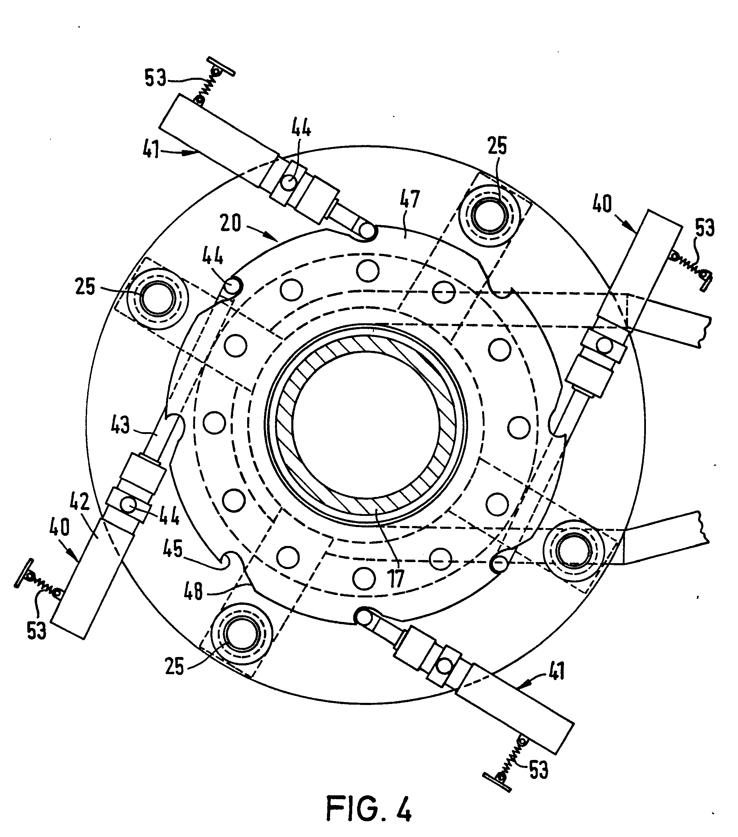

Fig. 4 zeigt ein Ausführungsbeispiel, das weitgehend dem ersten Ausführungsbeispiel entspricht, so daß nachfolgend lediglich die Unterschiede erläutert werden.

Der in Fig. 4 dargestellte Drehantrieb dient dazu, den Drehteller 20 ausschließlich in einer Richtung zu drehen. Dadurch vereinfacht sich die Gestalt der Umfangsfläche des Drehtellers. In dieser Umfangsfläche sind lediglich die muldenförmigen ersten Eingriffsteile 45 mit den sich daran anschließenden rückwärtigen Flanken 48 vorhanden. Die Schwenkvorrichtungen 53 bestehen aus Federn, die am Tisch 19 verankert sind, um den zugehörigen Antriebszylinder 40 bzw. 41 um seine vertikale Achse 44 herum so verschwenken, daß der Stößel 44 stets gegen die Umfangsfläche des Drehtellers 47 drückt.

**Ansprüche**

1. Erdbohrgerät zum drehenden Vortreiben eines Rohres (17) in das Erdreich, mit einem an dem Rohr über eine Klemmvorrichtung (28, 35) angreifenden Drehteller (20), der durch mindestens einen hin- und hergehend angetriebenen ersten Antriebszylinder (40) drehbar ist, und mit einem den ersten Antriebszylinder (40) abstützenden und den Drehteller (20) tragenden Tisch (19), der drehfest abgestützt ist, **dadurch gekennzeichnet,** daß der Drehteller (20) mehrere über seinen Umfang verteilte Eingriffsteile (45) zum Ansetzen des ersten Antriebszylinders (40) aufweist, daß der erste Antriebszylinder (40) bei seinem Arbeitshub gegen jeweils eines der Eingriffsteile (45) drückt und sich bei seinem Rückhub von diesem Eingriffsteil entfernt und daß eine Schwenkvorrichtung (49, 53) vorgesehen ist, die den ersten Antriebszylinder (40) bei Beginn des Arbeitshubes in Richtung auf die Achse des Drehtellers (20) schwenkt und an eines der Eingriffsteile (45) ansetzt.

2. Erdbohrgerät nach Anspruch 1, dadurch gekennzeichnet, daß an dem Drehteller (20) mindestens ein zweiter Antriebszylinder (41) angreift, der im wesentlichen gegenphasig zu dem ersten Antriebszylinder (40) gesteuert ist, derart, daß der erste und der zweite Antriebszylinder eine kontinuierliche Drehung des Drehtellers (20) bewirken.

3. Erdbohrgerät nach Anspruch 1 oder 2, dadurch gekennzeichnet, daß die Klemmvorrichtung (28,35) mehrere Klemmbacken (28) aufweist, die von einem an dem Tisch (19) geführten Druckorgan (35) axial gegen eine Schrägfläche (27) des Drehtellers (20) gedrückt werden und daß Spannelemente (34) vorgesehen sind, die das Druckorgan (35) gegen den Drehteller (20) ziehen.

4. Erdbohrgerät nach Anspruch 3, dadurch gekennzeichnet, daß die Klemmbacken (28) gegenüber dem Druckorgan (35) durch Axiallager - (29) abgestüzt sind.

5. Erdbohrgerät nach einem der Ansprüche 1 bis 4, dadurch gekennzeichnet, daß der Drehteller - (20) erste Eingriffsteile (45) zum Angreifen der Antriebszylinder (40,41) in der einen Drehrichtung durch Druck und zweite Eingriffsteile (46) zum Angreifen der Antriebszylinder (40,41) in der anderen Drehrichtung durch Zug aufweist.

6. Erdbohrgerät nach einem der Ansprüche 1 bis 5, dadurch gekennzeichnet, daß jede Schwenkvorrichtung aus einem Antrieb (49) besteht, der in Abhängigkeit von der Wegposition des Kolbens des zugehörigen Antriebszylinders (40,41) gesteuert ist.

7. Erdbohrgerät nach Anspruch 5 und 6, dadurch gekennzeichnet, daß die Antriebe (49) derart gesteuert sind, daß sie die Antriebszylinder - (40,41) jeweils nur an die ersten oder nur an die zweiten Eingriffsteile (45;46) ansetzen.

8. Erdbohrgerät nach einem der Ansprüche 1 bis 7, dadurch gekennzeichnet, daß der Tisch (19) über mindestens zwei Stützen (23) an einem Gegenlager (10) abgestützt ist.

9. Erdbohrgerät nach Anspruch 8, dadurch gekennzeichnet, daß ein an dem Gegenlager (10) befestigtes Grundgestell (21) Stempel (25) trägt, an denen der Tisch (19) quer zum Grundgestell (21) verfahrbar ist.

FIG.1

0 225 979

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 131 539 (HOCHSTRASSER) <br> * Zusammenfassung; Patentanspruch 1; Seite 9, Zeilen 23-33 * | 1,2 | E 21 B 7/20 <br> E 21 B 3/04 |
| A | | 3,4 | |
| | --- | | |
| Y | DE-A-2 126 826 (SCHIESS AG) <br> * Patentanspruch 1; Figur 1 * | 1 | |
| A | | 5 | |
| | --- | | |
| Y | US-A-3 515 009 (MATUSCH et al.) <br> * Zusammenfassung; Figur 1 * | 2 | |
| A | | 5,6 | RECHERCHIERTE SACHGEBIETE (Int. Cl.4) |
| | --- | | |
| A | US-A-3 980 145 (WIBOM) <br> * Zusammenfassung; Figur 1 * | 1,8 | E 21 B <br> E 02 F <br> E 02 D <br> F 16 B |
| | --- | | |
| A | US-A-3 779 322 (STEVENS) <br> * Zusammenfassung; Seite 4, Zeilen 58-65 * | 1 | |
| | --- | | |
| A | CH-A- 357 012 (VEB ZEMENTANLAGENBAU DESSAU) <br> * Hauptanspruch * | 1,2 | |
| | ---     -/- | | |

Der vorliegende Recherchenbericht wurde für alle Patentansprüche erstellt.

| Recherchenort <br> DEN HAAG | Abschlußdatum der Recherche <br> 24-03-1987 | Prüfer <br> HEDEMANN, G.A. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 398 598 (FABRYGEL) <br> * Zusammenfassung; Figur 1 * | 1 | |
| A | US-A-3 246 547 (O'NEILL) <br> * Spalte 3, Zeile 69 - Spalte 4, Zeile 3; Figur 3 * | 1 | |
| A | DE-A-2 165 992 (THE ROBBINS CO.) <br> * Seite 11, Zeile 26 - Seite 12, Zeile 19; Figur 9 * | 1 | |

RECHERCHIERTE SACHGEBIETE (Int. Cl.4)

Der vorliegende Recherchenbericht wurde für alle Patentansprüche erstellt.

| Recherchenort <br> DEN HAAG | Abschlußdatum der Recherche <br> 24-03-1987 | Prüfer <br> HEDEMANN,G.A. |
|---|---|---|